# EUROPÄISCHE PATENTSCHRIFT

(11) **EP 2 383 137 B1**
(45) Veröffentlichungstag und Bekanntmachung des Hinweises auf die Patenterteilung: **02.01.2019**
(21) Anmeldenummer: 11001687.0
(22) Anmeldetag: 01.03.2011
(51) Int. Cl.: B60K 5/02, B60K 5/12

(54) **Aggregateaufhängung, insbesondere für Kraftfahrzeuge**
Aggregate suspension, in particular for a motor vehicle
Suspension d'agrégat, notamment pour véhicules automobiles

(30) Priorität: 27.04.2010 DE 102010018355
(43) Veröffentlichungstag der Anmeldung: 02.11.2011
(73) Patentinhaber: MAN Truck & Bus AG, 80995 München (DE)
(72) Erfinder: Hollweck, Johannes, 92237 Sulzbach-Rosenberg (DE)
(74) Vertreter: v. Bezold & Partner Patentanwälte - PartG mbB

(56) Entgegenhaltungen:
- EP-A1- 0 279 876
- US-A- 1 949 064
- US-A- 2 084 080

## Beschreibung

Die vorliegende Erfindung betrifft eine Aggregateaufhängung, insbesondere für Kraftfahrzeuge, gemäß dem Oberbegriff des Patentanspruches 1.
Die gattungsgemäße Aggregateaufhängung entspricht dem geläufigen Stand der Technik und ist insbesondere in Kraftfahrzeugen häufig verwendet, wie z.B. EP 0 279 876 A1, US 2 084 080 A und US 1 949 064 A belegen. Das Aggregat kann dabei eine Brennkraftmaschine, gegebenenfalls kombiniert mit einem angeflanschten Geschwindigkeits-Wechselgetriebe und gegebenenfalls ferner mit einem integrierten Differenzial sein. Die Aggregateaufhängung kann zum Beispiel eine Dreipunkt- oder Vierpunkt-Aufhängung sein, bei der u.a. zwei Stützen beiderseits einer Längsseite des Aggregates und gegenüberliegend angeordnet sind und die auftretenden statischen und dynamischen Belastungen aufnehmen. Die Stützen sind zumeist winkelförmig mit einer Basisplatte und einem seitlich dazu abragenden Arm ausgeführt und leiten die wirkenden Aufhängungskräfte und -momente entsprechend in das Gehäuse des Aggregates, zum Beispiel das Zylinder-Kurbelgehäuse der Brennkraftmaschine ein.
Aufgabe der Erfindung ist es, eine Aggregateaufhängung der gattungsgemäßen Art vorzuschlagen, mit der es mit baulich einfachen, gewichtsgünstigen Mitteln gelingt, eine besonders steife, tragfähige und das Gehäuse des Aggregates weniger belastende Aufhängung zu schaffen.

Diese Aufgabe wird erfindungsgemäß mit den Merkmalen des Patentanspruches 1 gelöst. Vorteilhafte und besonders zweckmäßige Weiterbildungen der Erfindung sind in den Unteransprüchen angeführt.

Erfindungsgemäß wird vorgeschlagen, dass die beiden Stützen mittels eines das Aggregat querenden Trägers fest miteinander verbunden sind. Damit gelingt es, die über die seitlich abragenden Arme der Stützen ausgeübten Kippmomente ohne Einleitung entsprechender Belastungen in das Gehäuse gegenseitig abzustützen bzw. über den querverlaufenden Träger zu eliminieren. Der Träger wird dabei in vorteilhafter Weise nur in Zug- und Druckrichtung belastet und kann somit baulich einfach und gewichtsgünstig ausgeführt sein. Unzulässig hohe Belastungen des Gehäuses an gegebenenfalls exponierten Stellen sind zuverlässig vermieden. Ferner kann gegebenenfalls der Befestigungsaufwand zwischen dem Gehäuse und den Stützen vermindert werden, zum Beispiel durch Entfall einzelner Befestigungsschrauben.

Bevorzugt sind die Stützen gemäß einer konkreten Ausgestaltung winkelförmig ausgebildet und weisen eine am Gehäuse des Aggregates befestigte, vorzugsweise angeschraubte, flanschartige Basisplatte sowie jeweils einen winklig von dieser Basisplatte abragenden Arm auf, so dass die Arme im montierten Zustand jeweils über die Lager, insbesondere über gummielastische Lager, an dem Traggestell, zum Beispiel an einer Rahmenkonstruktion des Kraftfahrzeuges, befestigt werden können. Mit einem derartigen winkelförmigen Stützenaufbau wird eine besonders stabile Anbindung des Aggregates an die Stützen und damit weiter an die Motorlager erzielt. Insbesondere in Verbindung mit einem derartigen Aufbau mit winkelförmig ausgebildeten Stützen ist es besonders vorteilhaft, dass der Träger an den Basisplatten jeweils außerhalb des konkreten Anbindungsbereiches des Arms an der Basisplatte befestigt ist. Dadurch ergeben sich hinsichtlich des Kraftflusses und der Krafteinleitung optimierte Verhältnisse, wobei bevorzugt vorgesehen ist, dass die Anbindung des Trägers bzw. der Strebe in einem, bezogen auf die Fahrzeughochachsenrichtung, im montierten Zustand unteren Stützenbereich erfolgt. Mit einer derartigen unterseitigen Anbindung wird der Bauraum für die darüber liegenden Aggregatbestandteile nicht beeinträchtigt.

In baulich und konstruktiv vorteilhafter Weise können die Basisplatten der Stützen verlängert sein, bevorzugt im montierten Zustand und in Fahrzeughochachsenrichtung gesehen nach unten verlängert sein, sowie der Träger an den verlängerten Abschnitten befestigt sein. Da Aggregateaufhängungen in der Regel relativ tief am Aggregat positioniert sind, erleichtert dies die zweckmäßige Anbringung des quer verlaufenden Trägers. Alternativ wäre jedoch auch eine Verlängerung der Basisplatten nach oben zur Aufnahme der von den Armen ausgeübten Kippmomente denkbar.

In besonders bevorzugter Weise können die Stützen mit den verlängerten Abschnitten derart am Gehäuse des Aggregates angeordnet sein, dass der Träger, im montierten Zustand und in Fahrzeughochachsenrichtung gesehen, unterhalb einer Kraftabgabewelle des Aggregates und vor einer Stirnseite des Gehäuses das Aggregat queren kann.

Des Weiteren kann das Aggregat zumindest durch eine Brennkraftmaschine gebildet sein, an deren Zylinder-Kurbelgehäuse die Stützen seitlich und an eine Stirnseite anschließend angebaut sind, wobei der Träger das Kurbelgehäuse vor dessen Stirnseite querend, bezogen auf die Fahrzeughochachsenrichtung, unterhalb der Kurbelwelle der Brennkraftmaschine verläuft. Damit gelingt es mit konstruktiv wenig aufwendigen Mitteln, den Träger ohne Beeinträchtigung anzubauender Zusatzaggregate derart zu verlegen, dass er montagegünstig angeordnet ist und eine zuverlässige Abstützung der Kippmomente an den Basisplatten der Stützen bewirkt.

In weiterer, vorteilhafter Ausgestaltung der Erfindung kann der Träger zusätzlich mit dem Gehäuse des Aggregates verschraubt sein. Daraus resultiert mit geringem Mehraufwand ein in sich besonders steifer Stützverband, der zudem eine leichte, unkomplizierte Konstruktion des Trägers ermöglicht.

Insbesondere kann der Träger im Wesentlichen im Querschnitt betrachtet ein stehendes Rechteckprofil aufweisen und mittels zumindest zweier Schrauben über an den Träger ausgebildete Befestigungsaugen mit den Basisabschnitten verschraubt sein. Ferner kann der Träger über zumindest zwei zwischen den Befestigungen des Trägers an den Basisplatten positionierte Schraubverbindungen zusätzlich mit dem Aggregatgehäuse verschraubt sein.

Schließlich kann der Träger bei einer Brennkraftmaschine als Aggregat zwischen einer an der Kurbelwelle angeschlossenen Riemenscheibe eines Riementriebes und der benachbarten Stirnseite des Kurbelgehäuses der Brennkraftmaschine das Kurbelgehäuse queren. Der Träger ist damit von der im Durchmesser größeren Riemenscheibe teilweise überdeckt, wobei der gegebenenfalls unmittelbar hinter der Riemenscheibe zur Verfügung stehende Bauraum optimal für die Durchführung des Trägers genutzt ist. Darüber liegende Zusatzaggregate oder zum Beispiel ein Gehäusedeckel der Maschinensteuerung können baulich unverändert bleiben bzw. angeordnet sein.

Ein Ausführungsbeispiel der Erfindung ist im Folgenden anhand der anliegenden, schematischen Zeichnung näher erläutert. Es zeigen:
- Fig. 1: eine Ansicht von vorne auf eine Brennkraftmaschine für ein Kraftfahrzeug, die als Teil einer nicht weiter dargestellten Aggregate-aufhängung in einem Kraftfahrzeug zwei seitlich und gegenüber liegend angeordnete Stützen aufweist, deren Basisplatten mittels eines quer verlaufenden Trägers abgestützt sind,
- Fig. 2: die Stützen der Aggregateaufhängung nach Fig. 1 mit dem angebauten Träger in separater, raumbildlicher Darstellung, ohne Aggregat bzw. Brennkraftmaschine, in einer Ansicht von vorne, und
- Fig. 3: die Stützen mit quer verlaufenden Träger gemäß den Fig. 1 und 2 in einer Ansicht schräg von vorne.

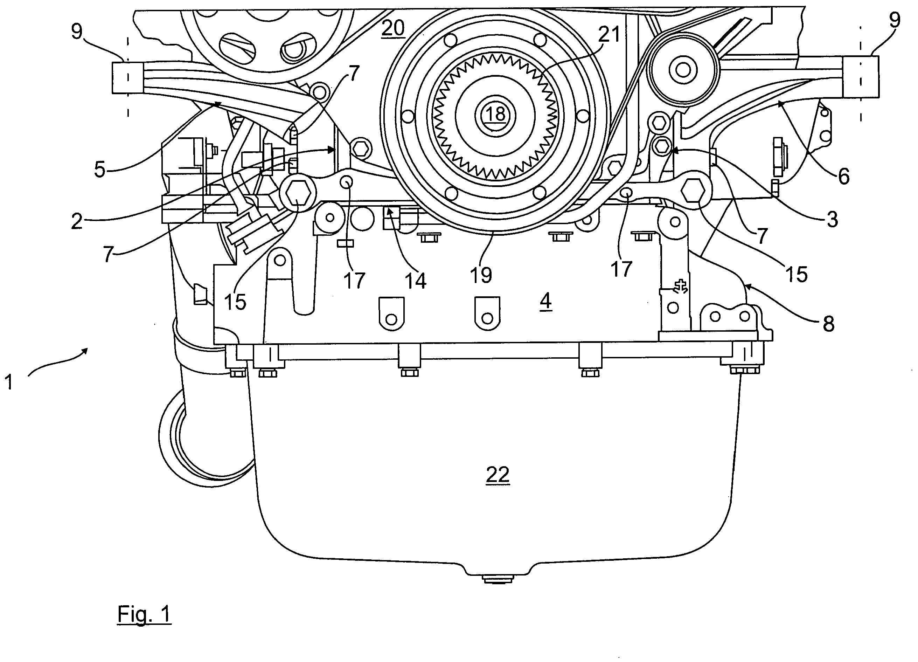

Die Fig. 1 zeigt den unteren Abschnitt einer Brennkraftmaschine 1, die nur soweit dargestellt und beschrieben ist, als dies für das Verständnis der vorliegenden Erfindung erforderlich ist.

Die mehrere Zylinder in Reihenanordnung aufweisende Brennkraftmaschine 1 weist an deren Längsseiten 2, 3 und in Nähe deren der Kraftabgabeseite gegenüberliegenden Stirnseite 4 zwei Stützen 5, 6 auf, die über mehrere Schrauben 7 an entsprechenden, in Längsrichtung parallel zueinander verlaufenden Flanschflächen (nicht ersichtlich) des Zylinder-Kurbelgehäuses 8 der Brennkraftmaschine 1 befestigt sind. Nach unten schließt an das Zylinder-Kurbelgehäuse 8 eine Ölwanne 22 an.

Die Stützen 5, 6 sind Teil einer Dreipunkt- oder Vierpunkt- Aggregateaufhängung des Kraftfahrzeuges und über nicht dargestellte, gummielastische Dämpferlager an in Querrichtung gegenüberliegenden Aufhängungspunkten (bei 9) am tragenden Aufbau des Kraftfahrzeuges abgestützt oder aufgehängt.

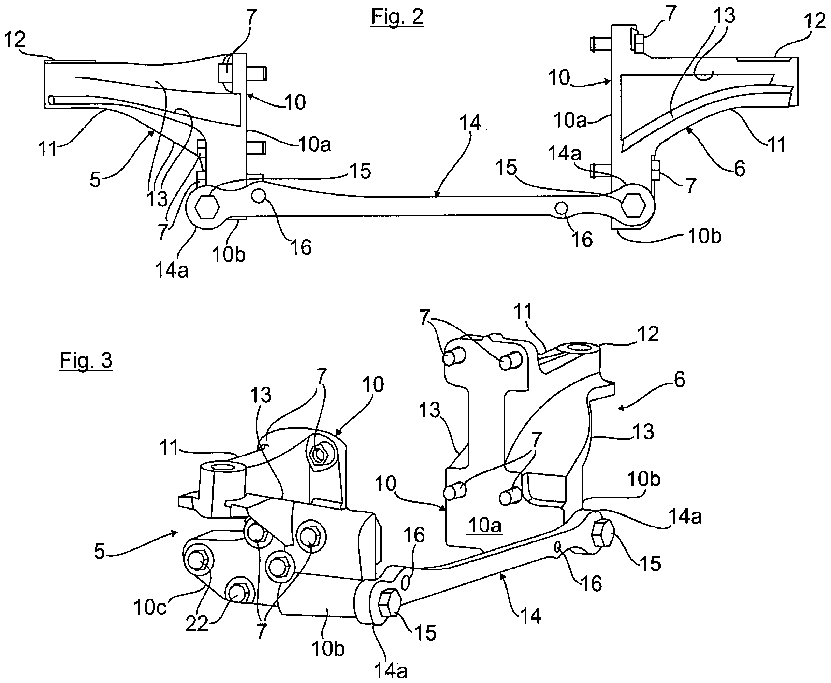

Die Fig. 2 und 3 zeigen die Konstruktion der Stützen 5, 6 im Detail. Die Stützen 5, 6 setzen sich jeweils aus einer vertikal ausgerichteten Basisplatte 10 und einem etwa horizontal dazu seitlich abragenden Arm 11 zusammen und sind zum Beispiel im Gussverfahren aus einer duktilen Eisenlegierung hergestellt.

Die Arme 11 weisen außenliegend jeweils ein Befestigungsauge 12 auf, mittels dem sie über eine entsprechende Schraube mit dem Dämpferlager der Aggregateaufhängung fest verbindbar sind.

Nach innen der Basisplatte 10 zu sind die Arme 11 mittels angeformter Verstärkungsrippen 13 sowohl in vertikaler Richtung als auch in Längsrichtung zur Aufnahme entsprechender statischer und im Fahrbetrieb dynamischer Belastungen entsprechend ausgesteift und an die Basisplatten 10 angebunden.

Die Basisplatten 10 sind mit ihren zum Zylinder-Kurbelgehäuse 8 bzw. zu dessen seitliche Flanschflächen korrespondierenden Flanschflächen 10a mittels mehrerer, die Flanschflächen 10a durchdringender Schrauben 7 am Zylinder-Kurbelgehäuse 8 (vgl. Fig. 1) befestigt.

Die Basisplatten 10 sind des Weiteren wie insbesondere aus den Fig. 2 und 3 entnehmbar ist, mit nach unten abragenden, unmittelbar angeformten Abschnitten 10b versehen, die mit einem quer verlaufenden Träger 14 fest verbunden sind.

Die Abschnitte 10b der Basisplatten 10 liegen dabei außerhalb des Verbindungsbereiches zwischen den Basisplatten 10 und den Armen 11, so dass die über die seitlich abragenden Arme 11 ausgeübten Kippmomente aus den wirkenden statischen und dynamischen Belastungen auf die Basisplatten 10 bzw. das Zylinder-Kurbelgehäuse 8 von dem Träger 14 abgestützt werden bzw. sich gegenseitig eliminieren.

Der bevorzugt aus Stahl hergestellte Träger 14 weist hier beispielhaft ein, im Querschnitt betrachtet, stehendes Rechteckprofil auf und geht an seinen freien Enden in Befestigungsaugen 14a über, durch die hindurch der Träger 14 mittels der Schrauben 15 fest an den Stirnseiten der verlängerten Abschnitte 10b der Basisplatten 10 angeschraubt ist.

Des Weiteren sind in dem Träger 14 zwischen den Schrauben 15 liegend zwei Bohrungen 16 eingearbeitet, über die der Träger 14 mittels zweier weiterer Schrauben 17 (vgl. Fig. 1) mit der Stirnseite 4 des Zylinder-Kurbelgehäuses 8 der Brennkraftmaschine 1 fest verschraubt ist.

Die Anordnung der sich in Querrichtung gegenüberliegenden Stützen 5, 6 mit den Basisplatten 10 und deren nach unten verlängerter Abschnitte 10b ist derart, dass der Träger 14, wie aus Fig. 1 ersichtlich ist, unterhalb der Kurbelwelle 18 und hinter einer an der Kurbelwelle 18 befestigten Riemenscheibe 19 eines nicht weiter beschriebenen Riementriebes der Brennkraftmaschine 1 in etwa horizontaler Richtung und die Brennkraftmaschine 1 querend hindurchführbar ist.

Der Träger 14 verläuft dabei ferner unterhalb eines Gehäusedeckels 20 der durch ein Zahnrad 21 angedeuteten Maschinensteuerung (Nockenwellenantriebes) der Brennkraftmaschine 1 und vor der Stirnseite 4 des Zylinder-Kurbelgehäuses 8 und ist mittels der Schrauben 17 mit dem Zylinder-Kurbelgehäuse 8 fest verschraubt.

Es versteht sich, dass die die Befestigungsaugen 14a des Trägers 14 kontaktierenden Stirnseiten (ohne Bezugszeichen) der verlängerten Abschnitte 10b der Basisplatten 10 der Stützen 5, 6 entsprechend nach vorne ragen und in einer Flucht mit der Stirnseite 4 im Bereich der Befestigungen 16, 17 des Trägers 14 am Zylinder-Kurbelgehäuse 8 ausgerichtet sind.

Bei den Stützen 5, 6, die bevorzugt aus Eisenguss oder einem höherfesten Werkstoff hergestellt sind, können gegebenenfalls auch noch Fortsätze 10c (vgl. Fig. 3, Stütze 5) an die Basisplatten 10 angeformt sein, über die benachbarte Zusatzaggregate der Brennkraftmaschine 1 oder andere Anbauten mittels Schrauben 22 befestigbar oder mit abstützbar sind.

Die aus den Kippkräften bzw. -momenten an den Basisplatten 10 auftretenden Belastungen des Trägers 14 sind, wie ohne weiteres ersichtlich ist, Druckkräfte oder gegebenenfalls auch Zugkräfte, die sich jedoch durch deren gegengerichtete Wirkungsrichtung jeweils gegenseitig aufheben und somit den Anbindungsbereich der Stützen 5, 6 am Zylinder-Kurbelgehäuse 8 entsprechend entlasten.

Die Erfindung ist nicht auf das beschriebene Ausführungsbeispiel beschränkt. So können die Basisplatten 10 bzw. deren Anschlussflansche 10a auch schräg zueinander verlaufen, was zum Beispiel bei V-Brennkraftmaschinen durchaus der Fall sein kann. Gleiches betrifft die horizontale Ausrichtung der Arme 11 der Stützen 5, 6, die verständlicher Weise zum Beispiel aus konstruktiven Einbauzwängen oder Einbauverhältnissen auch schräg zu einer Horizontalen und/oder auch bogenförmig ausgeführt sein können.

Für die Lehre der vorliegenden Erfindung relevant ist die Abstützung der durch die Konstruktion der Stützen 5, 6 auftretenden Kippmomente über den verlängerten Abschnitt 10b der Basisplatten 10 und den Träger 14, der ebenfalls gegebenenfalls aus konstruktiven Zwängen heraus nicht horizontal, sondern schräg dazu angeordnet sein könnte.

### Bezugszeichenliste

- 1: Brennkraftmaschine
- 2: Längsseite
- 3: Längsseite
- 4: Stirnseite
- 5: Stütze
- 6: Stütze
- 7: Schrauben
- 8: Zylinder-Kurbelgehäuse
- 9: Aufhängungspunkte
- 10: Basisplatte
- 10a: Flanschfläche
- 10: verlängerter Abschnitt
- 10c: Fortsatz
- 11: Arm
- 12: Befestigungsauge
- 13: Verstärkungsrippen
- 14: Träger
- 14a: Befestigungsaugen
- 15: Schrauben
- 16: Bohrungen
- 17: Schrauben
- 18: Kurbelwelle
- 19: Riemenrad
- 20: Gehäusedeckel
- 21: Zahnrad
- 22: Ölwanne

## Patentansprüche

1. Aggregateaufhängung, insbesondere für Kraftfahrzeuge, mit zumindest zwei seitlich am Aggregat (1) und in etwa gegenüberliegend angebauten Stützen (5, 6), wobei die Stützen (5, 6) jeweils wenigstens einen von der Stütze (5, 6) abragenden Arm (11) aufweisen, die über Lager an einem Traggestell des Fahrzeugs befestigbar sind, **dadurch gekennzeichnet, dass** die beiden Stützen (5, 6) mittels eines das Aggregat (1) querenden, strebenartigen Trägers (14) fest miteinander verbunden sind.

2. Aggregateaufhängung nach Anspruch 1, **dadurch gekennzeichnet, dass** die Stützen (5, 6) winkelförmig ausgebildet sind und eine am Gehäuse (8) des Aggregates (1) befestigte, vorzugsweise angeschraubte, Basisplatte (10) sowie jeweils einen winklig davon abragenden Arm (11) aufweisen, wobei die Arme (11) im montierten Zustand jeweils über die Lager, insbesondere über gummielastische Lager, an dem Traggestell, insbesondere an einer Rahmenkonstruktion des Kraftfahrzeuges, befestigbar sind.

3. Aggregateaufhängung nach Anspruch 2, **dadurch gekennzeichnet, dass** der Träger (14) an den Basisplatten (10) jeweils außerhalb des Anbindungsbereiches des Arms (11) an der Basisplatte (10) befestigt ist.

4. Aggregateaufhängung nach Anspruch 2 oder 3, **dadurch gekennzeichnet, dass** die Basisplatten (10) der Stützen (5, 6) verlängert sind und dass der Träger (14) an den verlängerten Abschnitten (10b) befestigt ist.

5. Aggregateaufhängung nach Anspruch 4, **dadurch gekennzeichnet, dass** die Stützen (5, 6) mit den verlängerten Abschnitten (10b) derart am Gehäuse (8) des Aggregates (1) angeordnet sind, dass der Träger (14) unterhalb einer Kraftabgabewelle (18) des Aggregates (1) und vor einer Stirnseite (4) des Gehäuses (8) das Aggregat (1) quert.

6. Aggregateaufhängung nach einem der vorhergehenden Ansprüche, **dadurch gekennzeichnet, dass** das Aggregat durch eine Brennkraftmaschine (1) gebildet ist, an deren Zylinder-Kurbelgehäuse (8) die Stützen (5, 6) seitlich und an eine Stirnseite (4) anschließend angebaut sind, wobei der Träger (14) das Kurbelgehäuse (8) vor dessen Stirnseite (4) querend unterhalb der Kurbelwelle (18) der Brennkraftmaschine (1) verläuft.

7. Aggregateaufhängung nach Anspruch 6, **dadurch gekennzeichnet, dass** der Träger (14) zwischen einer an der Kurbelwelle (18) angeschlossenen Riemenscheibe (19) eines Riementriebes und der benachbarten Stirnseite (4) des Kurbelgehäuses (8) der Brennkraftmaschine (1) das Kurbelgehäuse (8) quert.

8. Aggregateaufhängung nach einem der vorhergehenden Ansprüche, **dadurch gekennzeichnet, dass** der Träger (14) zusätzlich mit dem Gehäuse (8) des Aggregates (1) verschraubt ist.

9. Aggregateaufhängung nach einem der vorhergehenden Ansprüche, **dadurch gekennzeichnet, dass** der Träger (14) im Wesentlichen im Querschnitt betrachtet ein stehendes Rechteckprofil aufweist und/oder mittels zumindest zweier Schrauben (15) über an dem Träger (14) ausgebildete Befestigungsaugen (14a) mit den Basisabschnitten (10b) verschraubt ist.

10. Aggregateaufhängung nach einem der vorhergehenden Ansprüche, **dadurch gekennzeichnet, dass** der Träger (14) über zumindest zwei zwischen den Befestigungen (15) des Trägers (14) an den Basisplatten (10b) positionierten Schraubverbindungen (16, 17) zusätzlich mit dem Aggregatgehäuse (8) verschraubt ist.

## Claims

1. A power unit mount, in particular for motor vehicles, having at least two supports (5, 6) which are attached laterally on the power unit (1) and so as to lie approximately opposite one another, the supports (5, 6) having in each case at least one arm (11) which protrudes from the support (5, 6), which arms (11) can be fastened to a load-bearing frame of the vehicle via bearings, **characterized in that** the two supports (5, 6) are connected fixedly to one another by means of a strut-like carrier (14) which crosses the power unit (1).

2. The power unit mount according to Claim 1, **characterized in that** the supports (5, 6) are of angled configuration and have a base plate (10) which is fastened, preferably screwed, to the housing (8) of the power unit (1) and in each case have one arm (11) which protrudes therefrom at an angle, it being possible, in the mounted state, for the arms (11) to be fastened to the load-bearing frame, in particular to a frame construction of the motor vehicle, in each case via the bearings, in particular via elastomeric bearings.

3. The power unit mount according to Claim 2, **characterized in that** the carrier (14) is fastened to the base plates (10) in each case outside the attachment region of the arm (11) on the base plate (10).

4. The power unit mount according to Claim 2 or 3, **characterized in that** the base plates (10) of the supports (5, 6) are extended, and **in that** the carrier (14) is fastened to the extended sections (10b).

5. The power unit mount according to Claim 4, **characterized in that** the supports (5, 6) with the extended sections (10b) are arranged on the housing (8) of the power unit (1) in such a way that the carrier (14) crosses the power unit (1) below a power output shaft (18) of the power unit (1) and in front of an end side (4) of the housing (8).

6. The power unit mount according to one of the preceding claims, **characterized in that** the power unit is formed by way of an internal combustion engine (1), on the cylinder crankcase (8) of which the supports (5, 6) are attached laterally and so as to adjoin an end side (4), the carrier (14) running below the crankshaft (18) of the internal combustion engine (1) so as to cross the crankcase (8) in front of its end side (4).

7. The power unit mount according to Claim 6, **characterized in that** the carrier (14) crosses the crankcase (8) between a pulley wheel (19) of a pulley drive, which pulley wheel (19) is connected to the crankshaft (18), and the adjoining end side (4) of the crankcase (8) of the internal combustion engine (1).

8. The power unit mount according to one of the preceding claims, **characterized in that** the carrier (14) is additionally screwed to the housing (8) of the power unit (1).

9. The power unit mount according to one of the preceding claims, **characterized in that** the carrier (14) has an upright rectangular profile as viewed substantially in cross section and/or is screwed to the base sections (10b) by means of at least two screws (15) via fastening eyelets (14a) which are configured on the carrier (14).

10. The power unit mount according to one of the preceding claims, **characterized in that** the carrier (14) is additionally screwed to the power unit housing (8) via at least two screw connections (16, 17) which are positioned between the fastenings (15) of the carrier (14) on the base plates (10b).

## Revendications

1. Suspension d'ensemble, en particulier pour véhicules automobiles, comprenant au moins deux supports (5, 6) montés latéralement sur l'ensemble (1) et approximativement en regard, les supports (5, 6) comprenant respectivement au moins un bras (11) faisant saillie à partir du support (5, 6), lesquels bras peuvent être fixés par le biais de paliers à un cadre porteur du véhicule, **caractérisée en ce que** les deux supports (5, 6) sont reliés solidement l'un à l'autre au moyen d'un longeron (14) en forme de barre traversant l'ensemble (1).

2. Suspension d'ensemble selon la revendication 1, **caractérisée en ce que** les supports (5, 6) sont réalisés de manière angulaire et comprennent respectivement une plaque de base (10) fixée au carter (8) de l'ensemble (1), de préférence vissée sur ce carter, ainsi que respectivement un bras (11) faisant saillie de manière angulaire à partir de celle-ci, les bras (11) pouvant être fixés, à l'état monté, respectivement par le biais des paliers, en particulier par le biais de paliers ayant l'élasticité du caoutchouc, sur le cadre porteur, en particulier sur une structure de cadre du véhicule automobile.

3. Suspension d'ensemble selon la revendication 2, **caractérisée en ce que** le longeron (14) est fixé aux plaques de base (10) respectivement à l'extérieur de la région de liaison du bras (11) à la plaque de base (10).

4. Suspension d'ensemble selon la revendication 2 ou 3, **caractérisée en ce que** les plaques de base (10) des supports (5, 6) sont prolongées et **en ce que** le longeron (14) est fixé aux parties prolongées (10b).

5. Suspension d'ensemble selon la revendication 4, **caractérisée en ce que** les supports (5, 6) comprenant les parties prolongées (10b) sont disposés sur le carter (8) de l'ensemble (1), de telle sorte que le longeron (14) traverse l'ensemble (1) en dessous d'un arbre de transmission de force (18) de l'ensemble (1) et devant un côté frontal (4) du carter (8).

6. Suspension d'ensemble selon l'une quelconque des revendications précédentes, **caractérisée en ce que** l'ensemble est formé par un moteur à combustion interne (1) sur le carter de bloc-cylindres (8) duquel les supports (5, 6) sont montés latéralement et de manière adjacente à un côté frontal (4), le longeron (14) s'étendant en dessous du vilebrequin (18) du moteur à combustion interne (1) de manière à traverser le carter de vilebrequin (8) devant son côté frontal (4).

7. Suspension d'ensemble selon la revendication 6, **caractérisée en ce que** le longeron (14) traverse le carter de vilebrequin (8) entre une poulie à courroie (19), raccordée au vilebrequin (18), d'un entraînement par courroie et le côté frontal (4) adjacent du carter de vilebrequin (8) du moteur à combustion interne (1).

8. Suspension d'ensemble selon l'une quelconque des revendications précédentes, **caractérisée en ce que** le longeron (14) est en outre vissé sur le carter (8) de l'ensemble (1).

9. Suspension d'ensemble selon l'une quelconque des revendications précédentes, **caractérisée en ce que** le longeron (14) présente, considéré sensiblement en section transversale, un profilé rectangulaire vertical et/ou est vissé sur les parties de base (10b) au moyen d'au moins deux vis (15), par le biais d'oeillets de fixation (14a) formés sur le longeron (14).

10. Suspension d'ensemble selon l'une quelconque des revendications précédentes, **caractérisée en ce que** le support (14) est vissé en outre sur le carter d'ensemble (8) par le biais d'au moins deux liaisons par vissage (16, 17) positionnées entre les fixations (15) du longeron (14) aux plaques de base (10b) .
